# EUROPÄISCHE PATENTSCHRIFT

(11) **EP 1 518 210 B1**
(45) Veröffentlichungstag und Bekanntmachung des Hinweises auf die Patenterteilung: **01.03.2006**
(21) Anmeldenummer: 03762430.1
(22) Anmeldetag: 01.07.2003
(51) Int. Cl.: G06T 9/00

(54) **VERFAHREN ZUR SPEICHERPLATZVERWALTUNG IN EINEM SPEICHERMEDIUM EINES DIGITALEN ENDGERÄTS BEI EINER DATENSPEICHERUNG NACH DEM VERFAHREN DER PRIORISIERTEN PIXELÜBERTRAGUNG**
METHOD FOR MANAGING STORAGE SPACE IN A STORAGE MEDIUM OF A DIGITAL TERMINAL FOR DATA STORAGE ACCORDING TO A PRIORITISED PIXEL TRANSFER METHOD
PROCEDE POUR GERER DE L'ESPACE MEMOIRE DANS UN SUPPORT D'ENREGISTREMENT D'UN TERMINAL NUMERIQUE LORS D'UNE MISE EN MEMOIRE SELON LE PROCEDE DE TRANSFERT DE PIXELS PRIORISE

(30) Priorität: 02.07.2002 DE 10229706
(43) Veröffentlichungstag der Anmeldung: 30.03.2005
(73) Patentinhaber: T-Mobile Deutschland GmbH, 53227 Bonn (DE)
(72) Erfinder: MOSSAKOWSKI, Gerd, 59227 Ahlen (DE)
(74) Vertreter: Riebling, Peter
(86) Internationale Anmeldenummer: PCT/DE2003/002181
(87) Internationale Veröffentlichungsnummer: WO 2004/006186

(56) Entgegenhaltungen:
- EP-A- 0 999 706
- DE-A- 10 113 880
- GB-A- 2 248 707
- US-A- 5 867 602
- US-B1- 6 246 797

## Beschreibung

Die Erfindung betrifft Verfahren zur Speicherplatzverwaltung in einem Speichermedium eines digitalen Endgeräts bei einer Datenspeicherung nach dem Verfahren der priorisierten Pixelübertragung.

In multimedialen, mobilen Endgeräten, wie z.B. digitalen Photoapparaten, Moblltelefonen, etc., ist der verfügbare Speicherplatz sehr begrenzt. Multimediale Daten, wie z.B. Bild und Videodaten, benötigen viel Speicherplatz, der auf mobilen Endgeräten nur sehr begrenzt zur Verfügung steht. Ist der maximal verfügbare Speicherplatz belegt, muss der Benutzer des Geräts entscheiden, ob er den alten Dateninhalt löschen möchte oder auf ein Speichern von neuen Daten verzichtet Dieser Umstand soll am Beispiel einer digitalen Fotokamera erläutert werden. Bevor er ein Foto macht muss der Benutzer am Fotoapparat einstellen, welche Bildauflösung das Foto haben soll. Modeme digitale Fotoapparate bieten mehrere Bildauflösungen zur Auswahl, z.B. 640x480, 800x600 oder 1024x768 Bildpunkte (Pixel). Wählt der Benutzer eine geringere Auflösung, z.B. 640x480 Pixel, so können mehr Fotos auf dem Speichermedium des Fotoapparats abgespeichert werden. Diese Fotos sind dann aber von niederer Qualität. Entscheidet sich der Benutzer für eine höhere Auflösung, z.B. 1024x768, so passen nur wenige Fotos auf das Speichermedium. Will der Benutzer bei vollem Speichermedium weiterhin Fotos machen, muss er zunächst Fotos löschen bzw. Speicherplatz freigeben, indem er vorhandene Fotos mit einer hohen Auflösung in Fotos mit einer niederen Auflösung umwandeln und abspeichert. In beiden Fällen wird der verfügbare Speicherplatz nicht optimal ausgenutzt.

Das erläuterte Beispiel und die damit verbundenen Nachteile ist auf andere mobile Endgeräte übertragbar, z.B. auf Audio- und Videoendgeräte.

In EP 0 999 706 A2 ist ein Verfahren zur dynamischen Verwaltung eines Speichers für digitale Bilddaten bekannt, das auf einem sogenannten "embedded coding" der Bitströme basiert. Bei diesem Verfahren werden die Bilddaten nach der Wichtigkeit der Bildinformation geordnet, wobei der Bitstrom derart codiert wird, dass die wichtigsten Bildinformationen zuerst und die am wenigsten wichtigen Bildinformationen zuletzt gespeichert worden. Ist das Speichermedium voll, können weitere Bildinformationen nur dadurch gespeichert werden, dass die am wenigsten wichtigen Bildinformationen der bisher gespeicherten Bilddaten gelöscht werden, so dass weiterer Speicherplatz freigegeben wird.

Ein ähnliches Verfahren ist in der US 6 246 797 A offenbart, wobei hier zur Codierung der Bilddaten eine DCT-Transformation oder eine Wellentransformation verwendet wird. Soll Speicherplatz freigegeben werden, müssen jeweils die Bildinformationen eines kompletten Bildes umcodiert werden, was eine relativ hohe Rechenleistung benötigt.

US 5 867 602 A offenbart ein Verfahren der Codierung von digitalen Daten mit Hilfe einer reversiblen Wellentransformation. Eine Anwendung des Verfahrens bei der Speicherplatzverwaltung eines Speichermediums ist nicht beschrieben.

Alle aus dem Stand der Technik bekannten Verfahren verwenden kein Codierungsverfahren, das auf einer priorisierten Pixelübertragung basiert.

Die Aufgabe der Erfindung besteht darin, ein Verfahren anzugeben, mit welchem der verfügbare Speicherplatz bei mulimedialen mobilen Endgeräten optimal genutzt werden kann.

Diese Aufgabe wird erfindungsgemäß durch die Merkmale des Patentanspruchs 1 gelöst.

Vorteilhafte Ausgestaltung und Weiberbildungen der Erfindung ergeben sich aus den Merkmalen der Unteransprüche.

Als Grundlage für das erfindungsgemäße Verfahren gelten die Verfahren zur Komprimierung und Dekomprimlerung von Bilddaten mittels priorisierter Pixelübertragung, die in den deutschen Patentanmeldungen DE 101 13 880.6 (entspricht PCT/DE02/00987) und DE 101 52 612.1 (entspricht PCT/DE02/00995) beschrieben sind. Bei diesen Verfahren werden z.B. digitale Videodaten bearbeitet, die aus einem Array einzelner Bildpunkte (Pixel) bestehen, wobei jedes Pixel einen sich zeitlich verändernden Pixelwert aufweist, der Farb- oder Helligkeitsinformation des Pixels beschreibt. Erfindungsgemäß wird jedem Pixel bzw. jeder Pixelgruppe eine Priorität zugeordnet und die Pixel entsprechend ihrer Priorisierung in einem Prioritätenanray abgelegt. Dieses Array enthält zu jedem Zeitpunkt, die nach der Priorisierung sortierten Pixelwerte. Entsprechend der Priorisierung werden diese Pixel, und die für die Berechnung der Priorisierung benutzten Pixelweite, übertragen bzw. abgespeichert. Ein Pixel bekommt eine hohe Priorität, wenn die Unterschiede zu seinen benachbarten Pixel sehr groß sind. Zur Rekonstruktion werden die jeweils aktuellen Plxelwerte auf dem Display dargestellt. Die noch nicht übertragenden Pixel werden aus den schon übertragenden Pixel berechnet. Diese Verfahren sind unabhängig von der verwendeten Bildauflösung. Die Bildauflösung wird nicht verändert.

Bei der priorisierten Pixelübertragung werden also zunächst die am höchsten priorisierten Pixelgruppen übertragen, die die wesentlichen Bildinformation enthalten. Danach werden die niedrig priorisierten Pixelgruppen übertragen, die vemachlässigbare Bildinformationen enthalten. Die am niedrigsten priorisierten Pixelgruppen können somit gelöscht werden ohne dass es einen wesentlichen Einfluss auf die Bildqualität hat.
Diesen Umstand macht sich die Erfindung zunutze.

Im mobilen Endgerät, z.B. einer digitalen Fotokamera, werden die Bilddaten erfindungsgemäß in Form von priorisierten Pixelgruppen gespeichert, wobei für das Speicherverfahren mindestens zwei Prioritätsschwellwerte für eine minimale und eine maximale Qualität der Bilddaten festgelegt werden. Diese Prioritätsschwellwerte können entweder vom Hersteller des Endgeräts fest vorgegeben sein oder vorzugsweise vom Benutzer frei gewählt werden.

Zurückkommend auf das Beispiel der digitalen Fotokamera werden zunächst alle Bilder mit der maximalen Qualität, d.h. der maximalen Qualität, aufgenommnen, solange bis die Kapazitätsgrenze des Speichermediums erreicht ist, d.h. das Speichermedium voll ist. Die Bilder werden dabei gemäß den in der DE 101 13 880.6 und DE 101 52 612.1 beschrieben Verfahren eingelesen und gespeichert, d.h. in Pixelgruppen zusammengefasst und in der Reihenfolge ihrer Prioritäten, sprich ihrer "Bildwichtigkeit" abgelegt.

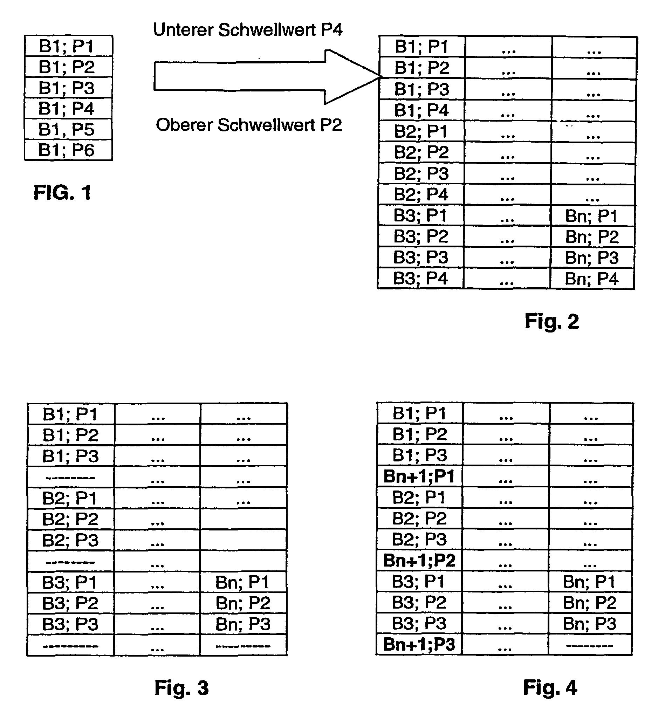

Ein Ausführungsbeispiel der Erfindung wird anhand der Zeichnungen Figur 1 bis Figur 4 erläutert.

Beispielsweise arbeitet das Bildverarbeitungsverfahren mit maximal sechs Prioritätsstufen P1 - P6. In der Praxis kann vorteilhaft mit einer sehr viel größeren Anzahl von Prioritätsstufen gearbeitet werden. Die Prioritätsstufen P1 - P6 werden jeweils einzelnen Pixelgruppen der zu speicherten Bilddaten B1, B2,..., Bn zugeordnet. P1 entspricht der höchsten, P6 der niedrigsten Prioritätsstufe. Der Benutzer wählt für eine Speicherung von aufgenommenen Bilddaten beispielsweise als untere Prioritätsschwelle P4 (maximale Qualität) und als obere Prioritätsschwelle P2 (minimale Qualität). Maximale Qualität bedeutet, dass pro Bild mehr Pixelgruppen zur Rekonstruktion des Bildes zur Verfügung stehen als vergleichsweise bei minimaler Qualität.
Zunächst werden für jedes neu eingelesene Bild gemäß Figur 1 die Pixelgruppen abgespeichert, deren Priorität größer oder gleich der unteren Prioritätsschwelle ist, d.h. die Pixelgruppen mit der Priorität P1 bis einschließlich der Priorität P4. Die Pixelgruppen mit P5 und P6 werden nicht gespeichert. Dies ist schematisch in Figur 2 dargestellt.

Ist das Speichermedium voll und will der Benutzer nun weitere Bilder machen, so werden erfindungsgemäß alle Pixelgruppen aus dem Speicher gelöscht, die bestimmte Prioritätsschwellen unterschreiten, d.h. die Pixelgruppen werden entsprechend der umgekehrten Reihenfolge ihrer Wichtigkeit gelöscht. Erfindungsgemäß wird die untere Prioritätsschwelle nun von P4 auf P3 heraufgesetzt, so dass bei allen bisher gespeicherten Bildern diejenigen Pixelgruppen gelöscht werden, die die Prioritätsschwelle P3 unterschreiten, sprich die Pixelgruppen mit der Priorität P4. Figur 3 zeigt, dass bei allen gespeicherten Bilddaten B1, B2,..., Bn die Pixelgruppen mit der Priorität P4 gelöscht wurden. Gibt es, wie im genannten Beispiel, nur 6 Prioritätsstufen, so wird ca. 1/6 des verfügbaren Speicherplatzes für neue Bilddaten freigegeben. Dies bedeutet, insbesondere wenn z.B. nur 1 neues Bild hinzugefügt werden soll, einen sehr hohen Qualitätsverlust bei den vorhandenen Bildern, so dass in der Praxis vorzugsweise eine sehr viel höhere Anzahl von Prioritätsstufen verwendet wird, so dass immer nur die benötigte Menge an Speicherplatz freigegeben wird, ohne einen allzu großen Qualitätsverlust bei den vorhandenen Bildern nach sich zu ziehen.

Figur 4 zeigt, dass der durch dieses Verfahren freigegebene Speicherplatz dazu genutzt werden kann, um neue Bilder abzuspeichem. Beispielsweise werden neue Bilddaten Bn+1 in Form von Pixelgruppen P1, P2, P3 abgespeichert, die an den entsprechenden freigegebenen Speicherpositionen des Speichermediums gespeichert werden.

Ist die Kapazitätsgrenze des Speichermediums wiederum erreicht, kann der oben beschriebene Vorgang solange fortgesetzt werden, bis der untere Prioritätsschwellwert dem oberen Prioritätsschwellwert, im Beispiel P2, entspricht ist. Im Beispiel bedeutet das, dass der Prioritätsschwellwert je nach Anzahl der zu speichernden Bildern stufenweise von auf P4, auf P3 bis hin zu P2 heraufgesetzt wird, so dass entsprechend Speicherplatz für die Speicherung von neuen Bildern freigegeben wird.

Wahlweise kann der Benutzer auf Kosten der Qualität entscheiden, welche Bilder oder Bilddaten für die Freigabe von neuem Speicherplatz freigegeben werden sollen. Er kann z.B. besonders wichtige Bilddaten für einen Zugriff sperren, so dass diese Bilder in ihrer vollen Aufnahmequalität erhalten bleiben.

Eine Weiterbildung der Erfindung sieht vor, dass der Benutzer in Abhängigkeit des Gerätetyps bei Bedarf unterschiedliche Bilder mit unterschiedlicher Qualitätsgrenzen festlegen kann oder den Bildern bestimmte Qualitätsstufen zuordnen kann.

Auch können vom Benutzer bestimmte Bild-/Dateibereiche, wie Gesichter oder im Bild befindliche Texte, nachträglich in der Priorisierung geändert werden. Nach der Regeneration des Bildes aus den abgespeicherten Daten kann der Benutzer bestimmte, für ihn besonderes interessante Bereiche, z.B. Gesichter, im Bild markieren. Diese markierten Bereiche werden dann mit einer höheren Priorität mit dem gesamten Bild abgespeichert.

Dieses Verfahren sorgt vorteilhaft für eine jeweils optimierte Ausnutzung des gesamten Speicherplatzes eines Speichermediums. Der Benutzer braucht sich nicht bzw. nicht in dem Maße wie bei der herkömmlichen Bildspeichertechnik im vorhinein zu überlegen, welche Bildauflösung er für welches Bild verwenden möchte. Je nach Anzahl der gespeicherten Bilder liegen diese immer in der maximal möglichen Bildqualität vor, die durch den verfügbaren Speicherplatz begrenzt wird.

Das hier beschriebene Verfahren läst sich nicht nur bei der Speicherung von Bilddaten anwenden, sondern ist auch bei Audio- oder Videodaten in gleicher Weise anwendbar, sofern diese Daten mit Hilfe der Verfahren der priorisierten Pixelgruppen gespeichert werden können.

## Patentansprüche

1. Verfahren zur Speicherplatzverwaltung in einem Speichermedium eines digitalen Endgeräts bei der Datenspeicherung nach dem Verfahren der priorisierten Pixelübertragung, bei dem die Daten aus einem Array einzelner Bildpunkte (Pixel) bestehen, wobei jedes Pixel einen Pixelwert aufweist, der Farb- oder Helligkeitsinformation des Pixels beschreibt, wobei ein Prioritätswert für jedes Pixel des Arrays durch Berechnen eines Pixeldifferenzwertes anhand des jeweiligen Pixelwerts des Pixels in Bezug auf die Pixelwerte einer zuvor festgelegten Gruppe von benachbarten Pixel ermittelt wird, die für die Berechnung des Prioritätswertes hinzugezogenen Pixel zu einer Pixelgruppe zusammengefasst werden, und Pixelgruppen des Bildarrays anhand ihres Prioritätswertes sortiert werden, wobei mehrere Dateien mit nach Prioritäten (P1. P2, ..., Pn) sortierten Pixelgruppen auf dem Speichermedium gespeichert werden, wobei das Verfahren folgende Schritte aufweist:
a. Festiegen eines unteren Prioritätsschweltwerts (Pu) und eines oberen Prioritätsschwellwerts (Po), wobei die Prioritätsschwellwerte indirekt angeben, wie viel Informationsinhalt einer Datei auf den Speichermedium gespeichert wird,
b. Speicherung von Dateien in Form ihrer Pixelgruppen mit der höchsten Priorität (P1) bis zu einer Priorität, die dem festgelegten unteren Prioritätsschwellwert (Pu) entspricht, solange bis der verfügbare Speicherplatz des Speichermediums belegt ist,
c. Erhöhen des unteren Prioritätsschwellwerts (Pu) um eine Prioritätsstufe;
d. Löschen von Pixelgruppen mit einer niedrigeren Priorität als die des aktuellen Prioritätsschwellwerts (Pu) auf dem Speichermedium, sobald auf dem Speichermedium weiterer Speicherplatz benötigt wird;
e. Verwenden des freigewordenen Speicherplatzes auf dem Speichermedium zum Abspeichem von weiteren Daten.

2. Verfahren nach Anspruch 1, **dadurch gekennzeichnet, dass** es in Abhängigkeit des benötigten Speicherplatzes bei Verfahrensschritt b) solange fortgesetzt wird, bis der obere Prioritätsschwellwert (Po) erreichet ist

3. Verfahren nach einem der Ansprüche 1 oder 2, **dadurch gekennzeichnet, dass** die Prioritätsschwellwerte (Po, Pu) durch den Benutzer des Endgeräts einstellbar sind.

4. Verfahren nach einem der Ansprüche 1 oder 2, **dadurch gekennzeichnet, dass** die Prioritätsschwellwerte (Po, Pu) vom Hersteller des Endgeräts fest vorgegeben sind.

5. Verfahren nach einem der Ansprüche 1 bis 4, **dadurch gekennzeichnet, dass** es nur auf bestimmte, vom Benutzer des Endgeräts ausgewählte Dateien angewendet wird.

6. Verfahren nach einem der Ansprüche 1 bis 5, **dadurch gekennzeichnet, dass** das Speichermedium mehrere Speicherteilbereiche umfasst, wobei für jeden Speicherteilbereich individuelle Prioritätsschwellwerte definierbar sind.

7. Verfahren nach einem der Ansprüche 1 bis 6, **dadurch gekennzeichnet, dass** die Dateien in mehrere Qualitätsklassen unterteilbar sind, wobei für jede Qualitätsklasse individuelle Prioritätsschwellwerte definierbar sind.

8. Verfahren nach einem der Anspruche 1 bis 7, **dadurch gekennzeichnet, dass** die Pixelgruppen aus digitalisierten Abtastwerten eines Audiosignals gebildet werden.

9. Verfahren nach einem der Ansprüche 1 bis 8, **dadurch gekennzeichnet, dass** die Dateien Bilddaten, Videodaten oder Audiodaten enthalten.

10. Verfahren nach einem der Ansprüche 1 bis 9, **dadurch gekennzeichnet, dass** vom Benutzer bestimmte Bild-/Dateibereiche, wie Gesichter oder im Bild befindliche Texte, auch nachträglich in der Priorisierung geändert werden können.

## Claims

1. Method for memory space management in a storage medium in a digital terminal device in data storage in accordance with the method of prioritised pixel transmission in which the data consist of an array of single picture elements (pixels), wherein each pixel has a pixel value describing colour or brightness information of the pixel, wherein a priority value for each pixel in the array is determined by calculating a pixel difference value on the basis of the respective pixel value of the pixel with reference to the pixel values of a previously defined group of neighbouring pixels, the pixels drawn upon for the calculation of the priority value are combined into a pixel group, and pixel groups in the picture array are sorted according to their priority value, wherein a plurality of data files containing pixel groups sorted according to priorities (P1, P2, ..., Pn) are stored on the storage medium, wherein the method comprises the following steps:
a. definition of a lower priority threshold value (Pu) and an upper priority threshold value (Po), wherein the priority threshold values indirectly specify how much information content of a data file is stored on the storage medium;
b. storage of data files in form of their pixel groups having the highest priority (P1) down to a priority corresponding to the defined lower threshold value (Pu) until the available memory space in the storage medium is occupied;
c. increasing the lower priority threshold value (Pu) by one priority level;
d. deletion of pixel groups having a priority lower than that of the current priority threshold value (Pu) on the storage medium as soon as further memory space is needed on the storage medium; and
e. use of the liberated memory space on the storage medium for storing further data.

2. Method according to claim 1, **characterised in that** depending on the memory space needed in step b) of the method it is continued until the upper priority threshold value (Po) is reached.

3. Method according to any of claims 1 or 2, **characterised in that** the priority threshold values (Po, Pu) are settable by the user of the terminal device.

4. Method according to any of claims 1 or 2, **characterised in that** the priority threshold values (Po, Pu) are fixedly predetermined by the manufacturer of the terminal device.

5. Method according to any of claims 1 to 4, **characterised in that** it is used only on certain data files selected by the user of the terminal device.

6. Method according to any of claims 1 to 5, **characterised in that** the storage medium comprises a plurality of memory subdomains, wherein for each memory subdomain individual priority threshold values are definable.

7. Method according to any of claims 1 to 6, **characterised in that** the data files are subdividable into a plurality of quality classes, wherein for each quality class individual priority threshold values are definable.

8. Method according to any of claims 1 to 7, **characterised in that** the pixel groups are formed of digitised sampled values of an audio signal.

9. Method according to any of claims 1 to 8, **characterised in that** the data files contain picture data, video data or audio data.

10. Method according to any of claims 1 to 9, **characterised in that** picture/data-file regions determined by the user, such as faces or texts present in the picture, can be modified even subsequently in the prioritisation.

## Revendications

1. Procédé de gestion de l'espace mémoire dans un support d'enregistrement d'un terminal numérique lors de la mise en mémoire de données selon le procédé du transfert de pixels priorisé selon lequel les données se composent d'un réseau de points d'image (pixels) individuels, chaque pixel ayant une valeur de pixel qui décrit ses informations de couleur ou de luminosité, une valeur de priorité étant déterminée pour chaque pixel du réseau grâce au calcul d'une valeur de différence de pixels à l'aide de la valeur du pixel par rapport aux valeurs d'un groupe de pixels voisins fixé préalablement, les pixels utilisés pour le calcul de ladite valeur de priorité sont réunis en un groupe de pixels et les groupes de pixels du réseau d'image sont classés à l'aide de leur valeur de priorité, plusieurs fichiers avec des groupes de pixels classés suivant des priorités (P1, P2, ..., Pn) étant mis en mémoire sur le support d'enregistrement, le procédé comprenant les étapes qui consistent à :
a. fixer une valeur seuil de priorité inférieure (Pu) et une valeur seuil de priorité supérieure (Po), ces valeurs seuils de priorité indiquant indirectement le volume du contenu d'informations d'un fichier qui est mise en mémoire sur le support d'enregistrement,
b. mettre en mémoire des fichiers sous la forme de leurs groupes de pixels avec la priorité la plus élevée (P1) jusqu'à une priorité qui correspond à la valeur seuil de priorité inférieure fixée (Pu) jusqu'à ce que l'espace mémoire disponible du support d'enregistrement soit occupé,
c. augmenter d'un niveau de priorité la valeur seuil de priorité inférieure (Pu),
d. effacer sur le support d'enregistrement les groupes de pixels dont la priorité est inférieure à celle de la valeur seuil de priorité actuelle (Pu) dès qu'on a besoin d'espace mémoire sur ledit support d'enregistrement,
e. utiliser l'espace mémoire libéré sur le support d'enregistrement, pour stocker d'autres données.

2. Procédé selon la revendication 1, **caractérisé en ce qu'**il est poursuivi en fonction de l'espace mémoire nécessaire au niveau de l'étape b) jusqu'à ce que la valeur seuil de priorité supérieure (Po) soit atteinte.

3. Procédé selon la revendication 1 ou 2, **caractérisé en ce que** les valeurs seuils de priorité (Po, Pu) peuvent être réglées par l'utilisateur du terminal.

4. Procédé selon la revendication 1 ou 2, **caractérisé en ce que** les valeurs seuils de priorité (Po, Pu) sont prédéfinies de manière définitive par le fabricant du terminal.

5. Procédé selon l'une des revendications 1 à 4, **caractérisé en ce qu'**il n'est appliqué qu'à des fichiers définis qui sont sélectionnés par l'utilisateur du terminal.

6. Procédé selon l'une des revendications 1 à 5, **caractérisé en ce que** le support d'enregistrement comprend plusieurs zones partielles de mémoire, des valeurs seuils de priorité individuelles pouvant être définies pour chaque zone partielle de mémoire.

7. Procédé selon l'une des revendications 1 à 6, **caractérisé en ce que** les fichiers peuvent être divisés en plusieurs catégories de qualité, des valeurs seuils de priorité individuelles pouvant être définies pour chaque catégorie de qualité.

8. Procédé selon l'une des revendications 1 à 7, **caractérisé en ce que** les groupes de pixels sont formés par des valeurs d'exploration numérisées d'un signal audio.

9. Procédé selon l'une des revendications 1 à 8, **caractérisé en ce que** les fichiers contiennent des données d'image, des données vidéo ou des données audio.

10. Procédé selon l'une des revendications 1 à 9, **caractérisé en ce que** la priorité de zones d'image/de fichier définies par l'utilisateur, comme des visages ou des textes situés dans l'image, peut aussi être modifiée ultérieurement.
